# EUROPÄISCHE PATENTANMELDUNG

(11) **EP 2 832 275 A1**
(43) Veröffentlichungstag der Anmeldung: **04.02.2015**
(21) Anmeldenummer: 14176745.9
(22) Anmeldetag: 11.07.2014
(51) Int. Cl.: A47J 43/07, A47J 43/046

(54) **Elektromotorisch betriebene Küchenmaschine und Verfahren zum Betreiben einer Küchenmaschine**

(30) Priorität: 02.08.2013 DE 102013108327
(71) Anmelder: Vorwerk & Co. Interholding GmbH, 42275 Wuppertal (DE)
(72) Erfinder: Koetz, Hendrik, 45138 Essen (DE)
(74) Vertreter: Müller, Enno

(57) **Zusammenfassung**

Die Erfindung betrifft zunächst eine elektromotorisch betriebene Küchenmaschine (1), sowie ein Verfahren zum Betreiben einer Küchenmaschine (1), insbesondere einer elektromotorisch betriebenen Küchenmaschine (1), wobei die Küchenmaschine (1) an unterschiedlichen Orten von einem Benutzer aufstellbar ist und zum selbsttätigen Zubereiten einer Speise entsprechend einem vorgegebenen Abarbeitungsprogramm eingerichtet ist. Um die Zubereitung von Speisen in einer derartigen Küchenmaschine so zu beeinflussen, dass mit höherer Sicherheit unabhängig von einem Standort, an welchem die Küchenmaschine aktuell betrieben wird, ein gleiches Ergebnis hinsichtlich einer Rezeptur erreicht wird, wird vorgeschlagen, dass eine Auswertung hinsichtlich Standortbedingung, wie insbesondere einer geographischen Höhe in der Küchenmaschine (1) vornehmbar ist und sich hieraus ergebende Änderungen von Parametern in einem Abarbeitungsprogramm, betreffend beispielsweise Parameter, wie Garzeit und/oder Gartemperatur, insbesondere durch vorgegebene Änderungswerte berücksichtigbar sind.

## Beschreibung

Die Erfindung betrifft zunächst eine elektromotorisch betriebene Küchenmaschine, wobei die Küchenmaschine an unterschiedlichen Orten von einem Benutzer aufstellbar ist und zum Zubereiten einer Speise entsprechend einem Abarbeitungsprogramm, gegebenenfalls zur selbsttätigen Zubereitung, zumindest bezüglich einiger Programmschritte, eingerichtet ist.

Weiter betrifft die Erfindung ein Verfahren zum Betreiben einer elektromotorisch betriebenen Küchenmaschine, wobei die Küchenmaschine an unterschiedlichen Orten von einem Benutzer aufgestellt werden kann und Rezepte enthält, die Anweisungen, gegebenenfalls zur selbsttätigen Ausführung durch die Küchenmaschine, hinsichtlich Bearbeitungsschritten, wie insbesondere Garzeit, enthalten.

Zum Stand der Technik ist beispielsweise zu einem grundsätzlich möglichen Aufbau einer solchen Küchenmaschine auf die DE 4414823 A1 zu verweisen. Zur weiteren möglichen Ausgestaltungen einer Küchenmaschine, auch hinsichtlich etwa Rezeptabarbeitung, ist auf die EP 2574261 A2 und die nicht vorveröffentlichten deutschen Patentanmeldungen 102013104735 und 102013102919 zu verweisen.

Bei derartigen Küchenmaschinen hat sich herausgestellt, dass die Rezepte, insbesondere auch bei einer selbsttätigen Abarbeitung zumindest von Teilen eines solchen Rezeptes, trotz sorgfältiger Erstellung und Austestung der Rezepte, nicht immer zu einem gleichen Ergebnis in Bezug auf eine danach zubereitete Speise führen. Die Erfindung beschäftigt sich daher mit der Problematik, die Zubereitung von Speisen in einer derartigen Küchenmaschine so zu beeinflussen, dass mit höherer Sicherheit unabhängig von einem Standort, an welchem die Küchenmaschine aktuell betrieben wird, ein gleiches Ergebnis hinsichtlich einer Rezeptur erreicht wird.

Eine mögliche Lösung der Aufgabe ist nach einem ersten Erfindungsgedanken bei einer Küchenmaschine gegeben, bei der eine Auswertung hinsichtlich des aktuellen Standortes im Hinblick auf Standortbedingungen, wie insbesondere eine geographische Höhe der Küchenmaschine, vornehmbar ist und sich hieraus ergebende Änderungen in einem Abarbeitungsprogramm, betreffend beispielsweise Garzeit und/oder Gartemperatur, insbesondere durch in Abhängigkeit einer Standortbedingung ermittelbaren Änderungswerte berücksichtigbar sind.

Der Erfindung liegt die Erkenntnis zugrunde, dass oftmals die geographische Höhe, gegebenenfalls aber auch eine besondere Klimaregion oder ein besonderer Klimazustand, etwa eine hohe Luftfeuchtigkeit, auf das Ergebnis der Zubereitung einer bestimmten Speise nach einem vorgegebenen Abarbeitungsprogramm (Rezept) Einfluss hat. Die geographische Höhe ist bekanntlich dafür ausschlaggebend, bei welcher Temperatur Wasser konkret zu sieden beginnt, also die Kochtemperatur gegeben ist.

Hier setzt nun die Erfindung ein und schlägt vor, dass bezüglich einer individuellen Küchenmaschine ihre spezielle Standortbedingung berücksichtigt wird. In einfachster Weise kann dies etwa dadurch geschehen, dass ein Nutzer Werte, insbesondere die geographische Höhe eines Aufstellortes, in die Küchenmaschine eingibt, zum Beispiel nachdem eine entsprechende Anfrage auf einem beispielsweise Display der Küchenmaschine erschienen ist.

Hieraus sich ergebende, bevorzugt selbsttätig von der Küchenmaschine etwa anhand einer vorgegebenen Datentabelle, die bevorzugt in der Küchenmaschine gespeichert ist oder aufgrund eines Algorithmus, der auch in der Küchenmaschine gespeichert sein kann, errechnete Änderungswerte können dann selbsttätig von der Küchenmaschine in einem oder mehreren beziehungsweise gegebenenfalls allen in der Küchenmaschine bereits gespeicherten oder in Zukunft gespeicherten Abarbeitungsprogrammen Berücksichtigung finden. Konkret können Werte wie Garzeit oder Gartemperatur mit einem Änderungsfaktor versehen werden, so dass eine andere Einstellung oder Zeitvorgabe erfolgt. Hierbei kann vorgesehen sein, dass ein Änderungsfaktor oder geänderte Werte in Abhängigkeit einer in dem Rezept oder Abarbeitungsprogramm konkret vorgesehene Gargut unterschiedlich bei einem gleichen Ausgangszustand (beispielsweise geographische Höhe) bestimmt werden.

Die Küchenmaschine kann aber auch diese möglichen Änderungen nur einem Nutzer zur Übernahme anbieten. Die tatsächliche Übernahme kann dann beispielsweise erst nach entsprechender Bestätigung durch den Benutzer, dass er die Änderungen durchführen will, erfolgen.

Entsprechend ergibt sich verfahrensmäßig beim Betreiben der Küchenmaschine, dass eine Auswertung hinsichtlich des aktuellen Standortes der Küchenmaschine vorgenommen wird und dass hieraus sich zufolge einer Standortbedingung wie geographische Höhe, Klimaregion, aktueller Klimawert etc. ergebende Änderungen in einem Abarbeitungsprogramm selbsttätig berücksichtigt werden oder einem Nutzer zur Berücksichtigung angeboten werden. Die Überprüfung hinsichtlich des aktuellen Standortes kann von der Küchenmaschine selbst, ohne Eingriff durch einen Benutzer, vorgenommen werden. Sie kann auch, wie bereits ausgeführt, auf entsprechende Anfrage durch die Küchenmaschine durch Eingabe diesbezüglicher Werte durch den Benutzer erfolgen.

Zur selbsttätigen Durchführung der Standortbestimmung weist die Küchenmaschine bevorzugt auch eine diesbezügliche Sensorik auf.

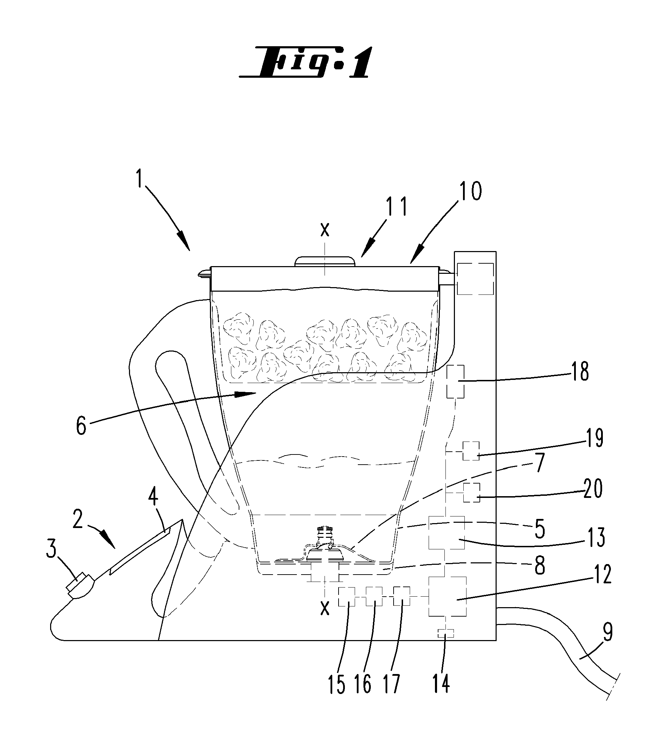

Weitere Merkmale der Erfindung sind nachstehend, auch in der Figurenbeschreibung und der Zeichnung, oftmals in ihrer bevorzugten Zuordnung zu den bereits vorstehend erläuterten Konzepten beschrieben bzw. dargestellt. Sie können aber auch in einer Zuordnung zu nur einem oder mehreren einzelnen Merkmalen, die beschrieben oder zeichnerisch dargestellt sind, oder unabhängig oder in einem anderen Gesamtkonzept von Bedeutung sein.

So ist es bevorzugt, dass die Küchenmaschine mit einem Sensor betreffend eine geographische Höhe, in welcher sie sich aktuell befindet, ausgerüstet ist und dass eine von dem Sensor erfasste geographische Höhe im Hinblick auf eine Änderung von Werten in dem Abarbeitungsprogramm berücksichtigbar ist. Eine Berücksichtigung muss, wie schon ausgeführt, nicht zwangsläufig erfolgen. Es kann aber eine selbsttätige, gegebenenfalls auch von dem Nutzer nicht weiter bemerkbare, Berücksichtigung erfolgen.

Hinsichtlich des Sensors selbst kann eine Vielzahl von Sensoren in Frage kommen. Zunächst ist ein üblicher Höhenmesser möglich, der entsprechend einem Barometer eine Analogmessung vornimmt. Es ist auch ein digitaler Höhenmesser möglich, der vorteilhafterweise auf einem Drucksensor, weiter bevorzugt einem kalibrierten und/oder Temperatur-komponensierten Drucksensor basiert. In weiterer Hinsicht kann auch beispielsweise ein Luftfeuchtesensor vorgesehen sein. Die Küchenmaschine kann so alternativ oder ergänzend auch zur möglichen Änderung von Parametern in einer Abarbeitung prüfen, ob ein bestimmter abweichender Luftfeuchtigkeitswert zu berücksichtigen ist.

Gegebenenfalls ist für einen derartigen Höhenmesser auch eine Einstellmöglichkeit an der Küchenmaschine dann vorteilhaft, um eine neue Kalibrierung von Zeit zu Zeit durchführen zu können.

Weiter bevorzugt ist, dass die Küchenmaschine, ergänzend oder alternativ, über eine IP-Adresse verfügt und dass vermittels der IP-Adresse eine, gegebenenfalls annähernde, Standortbestimmung durchführbar ist. Über die Standortbestimmung, etwa in Bezug auf Längen- und Breitengrade, kann dann anhand einer vorteilhafterweise in der Küchenmaschine bereits hinterlegten Tabelle eine Bestimmung der tatsächlichen geographischen Höhe, in welcher sich die Küchenmaschine aktuell befindet, vornehmbar sein oder vorgenommen werden.

In gleicher Weise kann, alternativ oder ergänzend, wobei hinsichtlich ergänzend ein Aspekt darin gesehen werden kann, dass auch über verschiedene Möglichkeiten erfasste Werte miteinander verglichen werden, vorgesehen sein, dass die Standortbestimmung über ein Satelliten-Positionierungssystem, etwa GPS, erfolgt. Hierzu enthält die Küchenmaschine dann vorteilhafterweise ein entsprechendes GPS-Modul, das geeignet ist, die Signale zur Standortbestimmung zu empfangen. Hierbei kann auch vorgesehen sein, dass die Küchenmaschine eine Meldung abgibt, dass sie zur Standortbestimmung um ein gewisses Ausmaß zu versetzen ist, wenn etwa keine Satelliten erfassbar sind.

Da Internetadressen von dem jeweiligen Provider ortsabhängig vergeben werden, kann über eine Internetadresse der Standort eines Gerätes mit Internetanschluss jedenfalls ausreichend genau für die Zwecke bei einer Küchenmaschine, wie hier zugrundeliegend, bestimmt werden. Wenn die Küchenmaschine weiter mit einer Funkverbindung ausgestattet ist, kann ein sich beispielsweise eine aus einer aktuellen Klimasituation ergebende Standortbedingung, wie eine aktuelle Luftfeuchte, Berücksichtigung finden. Derartige Werte können zur Berücksichtigung in der Küchenmaschine an diese per Funk übertragen werden. Gerade hinsichtlich der Luftfeuchtigkeit, allgemein im vorliegenden Zusammenhang, kann aber auch vorgesehen sein, dass diese nicht berücksichtigt wird. Etwa wenn die Küchenmaschine sich bekanntermaßen in einer klimatisierten Umgebung befindet. Dies kann beispielsweise zur Auswahl des Benutzers gestellt sein.

Kochendes Wasser ist in vielen Rezepten beziehungsweise Abarbeitungsprogrammen einer Küchenmaschine ein wichtiger Bestandteil zur Erwärmung des Garguts. Die Siedetemperatur des Wassers ist jedoch, wie schon angemerkt, bekanntlich abhängig von dem herrschenden Luftdruck und dieser wieder wird wesentlich bestimmt durch die geographische Höhe, in der sich ein Kochgerät, wie die hier zugrundeliegende Küchenmaschine befindet. Aus einer nicht der Auslegungshöhe (in der Regel normale Höhe) entsprechenden geographischen Höhe ergibt sich mithin ein gewisser Korrekturfaktor für eine Kochzeit oder auch eine Temperatureinstellung. Insbesondere im Hinblick auf Kochvorgänge betreffend Reis, Nudeln, Kartoffeln oder Eier, ist auch eine eventuell geringfügige Änderung in der Siedetemperatur und der daraus resultierenden Kochzeit von wesentlicher Bedeutung.

Nachstehend ist die Erfindung des Weiteren anhand der beigefügten Zeichnung, die jedoch nur eine Figur darstellt, erläutert. Die einzige Figur der

Zeichnung zeigt schematisch eine Küchenmaschine, wie sie hier zugrunde liegen kann.

Dargestellt und beschrieben ist eine Küchenmaschine 1, die elektrisch betrieben ist.

Die Küchenmaschine weist ein Bedienfeld 2 auf mit bevorzugt einer Mehrzahl von Reglern und/oder Tasten 3 sowie bevorzugt ein Display 4 zum Anzeigen der insbesondere über die Regler und/oder Tasten 3 einzustellenden Parameter.

Das Display 4 kann auch dazu dienen, auszuwählende Abarbeitungsprogramme oder Rezepte anzuzeigen und über entsprechende Bedienelemente zum Abarbeiten, gegebenenfalls in Form von einzelnen Bearbeitungsschritten, freizugeben.

Des Weiteren verfügt die Küchenmaschine 1 über eine Gefäßaufnahme 5. In dieser ist ein Gargefäß 6 insbesondere im Fußbereich der Gefäßaufnahme 5 aufnehmbar, bevorzugt formschlüssig aufnehm- und halterbar.

Das Gargefäß 6 ist bevorzugt im Wesentlichen rotationssymmetrisch ausgebildet, mit einer zentralen Vertikalachse x.

Im Bodenbereich weist das Gefäß 6 bevorzugt ein Rührwerk 7 auf. Dieses ist in der Zuordnungsdarstellung des Gargefäßes 6 mit der Gefäßaufnahme 5 formschlüssig gekoppelt und mit einem in der Küchenmaschine 1 vorgesehenen Rührwerkantrieb, bevorzugt einem Elektroantrieb, antreibbar.

Die Elektroversorgung der Küchenmaschine beziehungsweise des Rührwerkantriebs sowie einer weiter bevorzugt behälterbodenseitig vorgesehenen Aufheizeinrichtung 8 und darüber hinaus auch der elektrischen Steuerung der gesamten Küchenmaschine 1 ist über ein Netzanschlusskabel 9 erreicht.

Das Gargefäß 6 ist weiter insbesondere im Betrieb des Rührwerks 7 und/oder der Aufheizvorrichtung 8 durch einen Verschlussdeckel 10 verschlossen. Dieser weist weiter bevorzugt zentral, die Vertikalachse x des Gefäßes 6 aufnehmend, eine Einfüllöffnung 11 auf (in der Darstellung durch ein Einsetzteil verschlossen), dies weiter bevorzugt bei insgesamt im Wesentlichen kreisscheibenförmigem Grundriss des Deckels 10.

In der Küchenmaschine 1 ist weiter bevorzugt ein hier nur schematisch angedeuteter Mikroprozessor 12 als Teil des Steuerungssystems enthalten. Der Mikroprozessor 12 kann mit einem flüchtigen Speicher 13 und/ oder einem nicht flüchtigen Speicher 13 zusammenwirken. Weiter kann der Mikroprozessor beziehungsweise das Steuerungssystem der Küchenmaschine 1 allgemein mit einem oder mehreren hier nur schematisch angedeuteten Sensoren 15, 16, 17 zusammenwirken.

Die Zusammenwirkung bedeutet, dass über einen solchen Sensor erfasste Werte an die zentrale Steuerung beziehungsweise gegebenenfalls den Mikroprozessor 12 geleitet werden und dort zur Auswertung im Hinblick auf einen eventuell Korrekturfaktor eines Bearbeitungsparameters, wie etwa einer Garzeit oder einer Gartemperatur, ausgewertet und berücksichtigt werden.

Weiter kann die Küchenmaschine 1 ein Funkmodul 18 aufweisen, mit dem gleichfalls über eine Funkverbindung Zustandswerte, wie eine geographische

Höhe oder eine Luftfeuchte etc. erhalten werden können zur gleichen Berücksichtigung in der Steuerungseinheit beziehungsweise dem Mikroprozessor 12, wie beschrieben.

Die Sensoren 15, 16, 17 können entsprechend ein Luftfeuchtesensor und/oder ein Höhenmesser und/oder ein Außentemperaturfühler sein.

Weiter ergänzend oder alternativ kann die Küchenmaschine ein GPS-Modul 19 aufweisen und/oder eine hier symbolisiert mit 20 angegebene IP-Adresse.

### Bezugszeichenliste:

| | | | |
|---|---|---|---|
| 1 | Küchenmaschine | x | Vertikalachse |
| 2 | Bedienfeld | | |
| 3 | Tasten/Regler | | |
| 4 | Display | | |
| 5 | Gefäßaufnahme | | |
| 6 | Gargefäß | | |
| 7 | Rührwerk | | |
| 8 | Aufheizvorrichtung | | |
| 9 | Netzanschlusskabel | | |
| 10 | Verschlussdeckel | | |
| 11 | Einfüllöffnung | | |
| 12 | Mikroprozessor | | |
| 13 | Speicher | | |
| 14 | Speicher | | |
| 15 | Sensor | | |
| 16 | Sensor | | |
| 17 | Sensor | | |
| 18 | Funkmodul | | |
| 19 | GPS-Modul | | |
| 20 | IP-Adresse | | |
| | | | |
| | | | |
| | | | |
| | | | |

## Patentansprüche

1. Elektromotorisch betriebene Küchenmaschine (1), wobei die Küchenmaschine (1) an unterschiedlichen Orten von einem Benutzer aufstellbar ist und zum selbsttätigen Zubereiten einer Speise entsprechend einem vorgegebenen Abarbeitungsprogramm eingerichtet ist, **dadurch gekennzeichnet, dass** eine Auswertung hinsichtlich einer Standortbedingung, wie insbesondere einer geographischen Höhe, in der Küchenmaschine (1) vornehmbar ist und sich hieraus ergebende Änderungen von Parametern in einem Abarbeitungsprogramm, betreffend beispielsweise Parameter wie Garzeit und/ oder Gartemperatur, insbesondere durch vorgegebene Änderungswerte, berücksichtigbar sind.

2. Küchenmaschine nach den Merkmalen des Oberbegriffs des Anspruches 1 oder nach Anspruch 1, **dadurch gekennzeichnet, dass** die Küchenmaschine (1) mit einem Sensor (15,16,17) betreffend eine geographische Höhe, in welcher sie sich befindet, ausgerüstet ist und dass eine von dem Sensor (15, 16, 17) erfasste geographische Höhe im Hinblick auf eine Änderung von Werten in dem Abarbeitungsprogramm berücksichtigbar ist.

3. Küchenmaschine nach Anspruch 1 oder 2, **dadurch gekennzeichnet, dass** die Küchenmaschine über eine IP-Adresse verfügt und dass vermittels der IP-Adresse eine, gegebenenfalls annähernde, Standortbestimmung durchführbar ist.

4. Küchenmaschine nach einem der vorhergehenden Ansprüche, **dadurch gekennzeichnet, dass** die Küchenmaschine über einen Mobilfunkanschluss verfügt und/oder ein GPS-Modul und dass hierauf basierend eine Standortbestimmung durchführbar ist.

5. Verfahren zum Betreiben einer Küchenmaschine (1), insbesondere einer elektromotorisch betriebenen Küchenmaschine (1), wobei die Küchenmaschine (1) an unterschiedlichen Orten von einem Benutzer aufgestellt werden kann und Rezepte enthält, die Anweisungen, gegebenenfalls zur selbsttätigen Ausführung durch die Küchenmaschine (1), hinsichtlich Bearbeitungsschritten, wie insbesondere Garzeit, enthalten, **dadurch gekennzeichnet, dass** eine Auswertung hinsichtlich eines aktuellen Standortes der Küchenmaschine (1) vorgenommen wird und dass daraus sich ergebende Änderungen in einem Abarbeitungsprogramm selbsttätig berücksichtigt werden oder einem Benutzer zur Berücksichtigung angeboten werden.
